(19) **Europäisches Patentamt / European Patent Office / Office européen des brevets**

(11) **EP 4 642 049 A1**

(12) **EUROPEAN PATENT APPLICATION**
published in accordance with Art. 153(4) EPC

(43) Date of publication:
**29.10.2025 Bulletin 2025/44**

(21) Application number: **24766183.8**

(22) Date of filing: **10.01.2024**

(51) International Patent Classification (IPC):
**H04Q 11/00** *(2006.01)*

(52) Cooperative Patent Classification (CPC):
**H04Q 11/00**

(86) International application number:
**PCT/CN2024/071665**

(87) International publication number:
**WO 2024/183460 (12.09.2024 Gazette 2024/37)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **06.03.2023 CN 202310244351**

(71) Applicant: **Huawei Technologies Co., Ltd.
Shenzhen, Guangdong 518129 (CN)**

(72) Inventors:
• **WANG, Jingyan
Shenzhen, Guangdong 518129 (CN)**
• **XIAO, Xinhua
Shenzhen, Guangdong 518129 (CN)**
• **PENG, Yuanyuan
Shenzhen, Guangdong 518129 (CN)**

(74) Representative: **Maiwald GmbH
Engineering
Elisenhof
Elisenstrasse 3
80335 München (DE)**

(54) **ARTIFICIAL-INTELLIGENCE COMPUTING SYSTEM AND METHOD**

(57) This application relates to the field of optical communication technologies, and discloses an artificial intelligence computing system and method, to resolve a problem of low communication efficiency caused by a hash conflict and traffic imbalance. In embodiments of this application, link communication between computing nodes in a process of implementing an AI data computing task is implemented through an optical switching network. Compared with using an electrical switching device, a communication link can be determined without using a hash algorithm, so that a hash conflict does not occur, and a problem of traffic imbalance caused by a hash conflict does not occur, thereby avoiding a packet loss caused by congestion, reducing communication time between computing nodes, and improving the communication efficiency. Each computing node supports control of cross links between input ports and output ports of an optical switch switching assembly in the optical switching network. In a process in which a computing node performs a computing task, a control unit of the computing node performs link switching based on a requirement of the computing node.

FIG. 6

EP 4 642 049 A1

**Description**

CROSS-REFERENCE TO RELATED APPLICATIONS

This application claims priority to Chinese Patent Application No. 202310244351.6, filed with the China National Intellectual Property Administration on March 6, 2023 and entitled "ARTIFICIAL INTELLIGENCE COMPUTING SYSTEM AND METHOD", which is incorporated herein by reference in its entirety.

TECHNICAL FIELD

Embodiments of this application relate to the field of artificial intelligence technologies, and in particular, to an artificial intelligence computing system and method.

BACKGROUND

With the development of various artificial intelligence scenarios and digital services, a requirement on artificial intelligence (Artificial Intelligence, AI) computing power increases exponentially. To improve the AI model training efficiency, a parallel training manner is currently used, that is, a manner of performing parallel training by using a plurality of computing nodes is used. In a parallel computing manner, different data/models are allocated to each computing node, AI model computing is completed on the plurality of computing nodes in parallel, and then convergence is performed within the computing node or between the computing nodes. Training completed by each computing node is only a part of a task, and communication needs to be performed between the computing nodes to perform data exchange and computing result aggregation. An advantage of high computing power of an AI trunk can be fully utilized only when computing and communication in the trunk are well coordinated. Therefore, an acceleration effect and scalability of parallel training are greatly affected by the communication efficiency between the computing nodes.

Currently, an electrical switching multi-level CLOS fat-tree networking architecture is used to implement communication between computing nodes. Specifically, electrical switches need to store and forward data hop by hop. In this manner, a hash algorithm needs to be used to implement data forwarding, which inevitably causes problems of hash conflict and traffic imbalance, leading to a packet loss caused by congestion, and increasing communication time between computing nodes. An increase in the communication time means waiting of computing resources, resulting in a waste of the computing resources.

SUMMARY

Embodiments of this application provide an AI computing system and method, to resolve a problem of low communication efficiency caused by a hash conflict and traffic imbalance.

According to a first aspect, an embodiment of this application provides an artificial intelligence computing system, including a computing node cluster, an optical switching network, and a control device. The computing node cluster includes K computing node pods, each computing node pod includes M computing nodes, and each computing node includes an input port and an output port. The optical switching network includes K first optical switch switching assemblies, K second optical switch switching assemblies, and F optical switching assemblies. Each first optical switch switching assembly in the K first optical switch switching assemblies includes M input ports and P output ports. Each second optical switch switching assembly in the K second optical switch switching assemblies includes P input ports and M output ports. Each optical switching assembly in the F optical switching assemblies includes N input ports and N output ports. K, M, F, and P are all positive integers, and $K*P=F*N$. $F \leq P$.

$M*K$ output ports included in $M*K$ computing nodes in the computing node cluster are connected to $M*K$ input ports included in the K first optical switch switching assemblies in one-to-one correspondence. $M*K$ input ports included in the $M*K$ computing nodes are connected to $M*K$ output ports included in the K second optical switch switching assemblies in one-to-one correspondence.

$P*K$ output ports included in the K first optical switch switching assemblies are connected to $F*N$ input ports included in the F optical switching assemblies in one-to-one correspondence, and at least F output ports of each first optical switch switching assembly in the K first optical switch switching assemblies are connected to different optical switching assemblies. $F*N$ output ports included in the F optical switching assemblies are connected to $P*K$ input ports included in the K second optical switch switching assemblies in one-to-one correspondence, and at least F input ports of each first optical switch switching assembly in the K second optical switch switching assemblies are connected to different optical switching assemblies.

The control device is configured to configure, based on a communication mode used by the $M*K$ computing nodes to complete an artificial intelligence AI data computing task, communication links between $P*K$ output ports included in the K first optical switch switching assemblies and P*K input ports included in the K second optical switch switching assemblies in the optical switching network.

In this application, the computing node pod may also be referred to as a computing node cluster, or may have another name. This is not limited in embodiments of this application. In embodiments of this application, two layers of optical switching assemblies are deployed in the optical switching network, where the first optical switch switching assembly and the second optical switch switching assembly are used as one layer of optical switching assemblies, and the F optical switching assemblies are used as another layer of optical switching assemblies. The control device uses the communication mode of the AI data computing task to configure the communication links. Compared with using an electrical switching device, a communication link can be determined without using a hash algorithm, so that a hash conflict does not occur, and a problem of traffic imbalance caused by a hash conflict does not occur, thereby avoiding a packet loss caused by congestion, reducing communication time between computing nodes, and improving the communication efficiency.

In a possible implementation, a first computing node pod further includes a control unit, and the control unit is configured to: control switching of cross links between input ports and output ports of a first optical switch switching assembly connected to the first computing node pod, and/or control switching of cross links between input ports and output ports of a second optical switch switching assembly connected to the first computing node pod; and the first computing node pod is any computing node pod in the K computing node pods.

An optical switch switching assembly is a fast optical switching assembly, supports point-to-point strict non-blocking switching, and has a switching speed at a ns-$\mu$s magnitude. In some scenarios, in a process of performing a computing task, each computing node may need to perform link switching to switch to a target computing node, and a control unit of the computing node performs link switching based on a requirement of the computing node, thereby improving the flexibility of a system application scenario. In addition, the optical switch switching assembly has a switching speed at a ns-$\mu$s magnitude, so as to further improve the communication efficiency between computing nodes.

In a possible implementation, an output port j of a first optical switch switching assembly i is connected to an input port n of an optical switching assembly whose index is m.

i represents an index of the first optical switch switching assembly, and j represents an index (index) of an output port of the first optical switch switching assembly. i=1...K, and j=1...P.

$$m = \left\lfloor \frac{((j-1)*K+i)}{N} \right\rfloor + 1, \text{ and } n = ((j-1)*K+i)\%N + 1$$

, where

$\lfloor \rfloor$ represents a rounding down operation, $\lfloor \rfloor$ may alternatively be represented as floor( ), and A%B represents A modulo B.

In a possible implementation, an input port b of an ath optical switching assembly at a middle stage is connected to an output port *r* of a first optical switch switching assembly *h* at an ingress stage. a=1...F, and a represents an index of the ath optical switching assembly at the middle stage. b=1...N, and b represents an index of the input port of the optical switching assembly at the middle stage.

$$r = \left\lfloor \frac{((a-1)*N+b)}{K} \right\rfloor + 1, \text{ and } h = ((a-1)*N+b)\%K + 1.$$

In a possible implementation, an input port b of an ath optical switching assembly at a middle stage is connected to an output port g of a second optical switch switching assembly *l* at an egress stage. a=1...F, and a represents an index of the ath optical switching assembly at the middle stage. b=1...N, and b represents an index of the input port of the optical switching assembly at the middle stage.

$$g = \left\lfloor \frac{((a-1)*N+b)}{K} \right\rfloor + 1, \text{ and } l = ((a-1)*N+b)\%K + 1.$$

In a possible implementation, the first optical switch switching assembly is an optical switch switching matrix including M first optical switch switching devices, each first optical switch switching device includes one input port and F output ports, and F*M=P.

The F output ports included in each first optical switch switching device are connected to input ports of different optical switching assemblies.

In a possible design, the second optical switch switching assembly is an optical switch switching matrix including M second optical switch switching devices, each second optical switch switching device includes F input ports and one output port, and F*M=P.

The F input ports included in each second optical switch switching device are connected to output ports of different optical switching assemblies.

In a possible implementation, the first optical switch switching assembly includes an optical switch switching matrix including M first optical switch switching devices and includes one third optical switch switching device including M input ports and M output ports, each optical switch switching device includes one input port and F output ports, F*M=P, the M output ports included in the third optical switch switching device are connected to M input ports of the optical switch switching matrix in one-to-one correspondence, and the M input ports included in the third optical switch switching device are connected to M output ports included in M computing nodes of a computing node pod that is correspondingly connected to the first optical switch switching assembly in one-to-one correspondence.

In a possible design, the second optical switch switching assembly includes an optical switch switching matrix including M second optical switch switching devices and includes one fourth optical switch switching device including M input ports and M output ports, each second optical switch switching device includes one input port and F output ports, F*M=P, the M input ports included in the fourth optical switch switching device are connected to M output ports of the optical switch switching matrix in one-to-one correspondence, and the M output ports included in the fourth optical switch switching device are connected to M input ports included in M computing nodes of a computing node pod that is correspondingly connected to the second optical switch switching assembly in one-to-one correspondence.

In a possible design, each optical switching assembly in the F optical switching assemblies is a micro-mechanical optical switching device.

In a possible design, each optical switching assembly in the F optical switching assemblies includes H micro-mechanical optical switching devices, each micro-mechanical optical switching device includes E input ports and E output ports, and H*E=N.

In a possible design, the optical switching network is deployed through a spine-leaf network structure or a Clos network structure. The first optical switch switching assembly is used as an optical switching assembly at an ingress stage, and the second optical switch switching assembly is used as an optical switching assembly at an egress stage. The F optical switching assemblies are used as optical switching assemblies at a middle stage.

According to a second aspect, an embodiment of this application provides an artificial intelligence computing method, applied to an artificial intelligence computing system, where the system includes a computing node cluster, an optical switching network, and a control device, the computing node cluster includes K computing node pods, each computing node pod includes M computing nodes, and each computing node includes an input port and an output port;

the optical switching network includes K first optical switch switching assemblies, K second optical switch switching assemblies, and F optical switching assemblies, each first optical switch switching assembly in the K first optical switch switching assemblies includes M input ports and P output ports, each second optical switch switching assembly in the K second optical switch switching assemblies includes P input ports and M output ports, and each optical switching assembly in the F optical switching assemblies includes N input ports and N output ports, where K, M, F, and P are all positive integers, and K*P=F*N;

M*K output ports included in M*K computing nodes in the computing node cluster are connected to M*K input ports included in the K first optical switch switching assemblies in one-to-one correspondence, and M*K input ports included in the M*K computing nodes are connected to M*K output ports included in the K second optical switch switching assemblies in one-to-one correspondence; and

P*K output ports included in the K first optical switch switching assemblies are connected to F*N input ports included in the F optical switching assemblies in one-to-one correspondence, and at least F output ports of each first optical switch switching assembly in the K first optical switch switching assemblies are connected to different optical switching assemblies; and F*N output ports included in the F optical switching assemblies are connected to P*K input ports included in the K second optical switch switching assemblies in one-to-one correspondence, and at least F input ports of each first optical switch switching assembly in the K second optical switch switching assemblies are connected to different optical switching assemblies; and

the method includes:

obtaining an artificial intelligence AI data computing task;

splitting the AI data computing task and separately deploying the split AI data computing task on the M*K computing nodes; and

configuring, based on a communication mode used by the M*K computing nodes to complete the artificial intelligence AI data computing task, communication links between P*K output ports included in the K first optical switch switching assemblies and P*K input ports included in the K second optical switch switching assemblies in the optical switching network.

In a possible implementation, the method further includes: after sending first computing data to a second computing node over a first communication link in the optical switching network, controlling, by a first computing node, a cross link between an input port of a first optical switch switching assembly connected to the first computing node and a first output port to be switched to a cross link with a second output port, to cause the first computing node to send second computing data to a third computing node over a second communication link in the optical switching network, where the first computing node, the second computing node, and the third computing node are any three computing nodes in the computing node cluster. The first communication link includes the cross link between the input port of the first optical switch switching assembly connected to the first computing node and the first output port. The second communication link includes the cross link between the input port of the first optical switch switching assembly connected to the first computing node and the second output port.

In the foregoing design, a cross link between an input port of a first optical switch switching assembly at an ingress stage and an output port is controlled, to control data sent by the computing node to reach different target computing nodes.

In a possible implementation, controlling the cross link between the input port of the first optical switch switching assembly connected to the first computing node and the first output port to be switched to the cross link with the second output port includes:

controlling, through a control unit in the first computing node, the cross link between the input port of the first optical switch switching assembly connected to the first computing node and the first output port to be switched to the cross link with the second output port.

In a possible implementation, the method further includes:

after receiving third computing data from the second computing node over a third communication link in the optical switching network, controlling, by the first computing node, a cross link between an output port of a second optical switch switching assembly connected to the first computing node and a first input port to be switched to a cross link with a second input port, to cause the first computing node to receive fourth computing data from the third computing node over a fourth communication link in the optical switching network, where

the first computing node, the second computing node, and the third computing node are any three computing nodes in the computing node cluster.

In the foregoing design, a cross link between an input port of a first optical switch switching assembly at an egress stage and an output port is controlled, to control the computing node to receive data from different target computing nodes.

BRIEF DESCRIPTION OF DRAWINGS

FIG. 1 is a diagram of a possible Clos network structure;
FIG. 2 is a diagram of a possible spine-leaf network structure;
FIG. 3 is a diagram of a possible data integration procedure;
FIG. 4 is a schematic flowchart of a possible full switching method;
FIG. 5 is a principle diagram of a MEMS OXC device;
FIG. 6 is a diagram of a structure of an AI computing system according to an embodiment of this application;
FIG. 7 is a diagram of a structure of another AI computing system according to an embodiment of this application;
FIG. 8 is a diagram of a structure of another possible AI computing system according to an embodiment of this application;
FIG. 9 is a diagram in which a computing node controls an optical switch switching assembly at an ingress stage to switch a cross link according to an embodiment of this application;
FIG. 10 is another diagram in which a computing node controls an optical switch switching assembly at an ingress stage to switch a cross link according to an embodiment of this application;
FIG. 11 is a diagram of a structure of an AI computing system with a spine-leaf network structure according to an embodiment of this application;
FIG. 12 is a diagram of a structure of still another AI computing system according to an embodiment of this application;
FIG. 13 is a diagram of a structure of still another AI computing system according to an embodiment of this application;
FIG. 14 is a diagram of a structure of still another AI computing system according to an embodiment of this application;
FIG. 15 is still another diagram in which a computing node controls an optical switch switching assembly at an ingress stage to switch a cross link according to an embodiment of this application;
FIG. 16 is a diagram of a structure of still another AI computing system according to an embodiment of this application; and
FIG. 17 is a schematic flowchart of an AI computing method according to an embodiment of this application.

DESCRIPTION OF EMBODIMENTS

To make the objectives, technical solutions, and advantages of embodiments of this application clearer, the following clearly and completely describes the technical solutions in embodiments of this application with reference to the accompanying drawings in embodiments of this application. Apparently, the described embodiments are merely a part rather than all of embodiments of this application. All other embodiments obtained by a person of ordinary skill in the art based on embodiments of this application without creative efforts shall fall within the protection scope of this application.
The following first describes technical concepts involved in this application.

(1) Clos architecture:

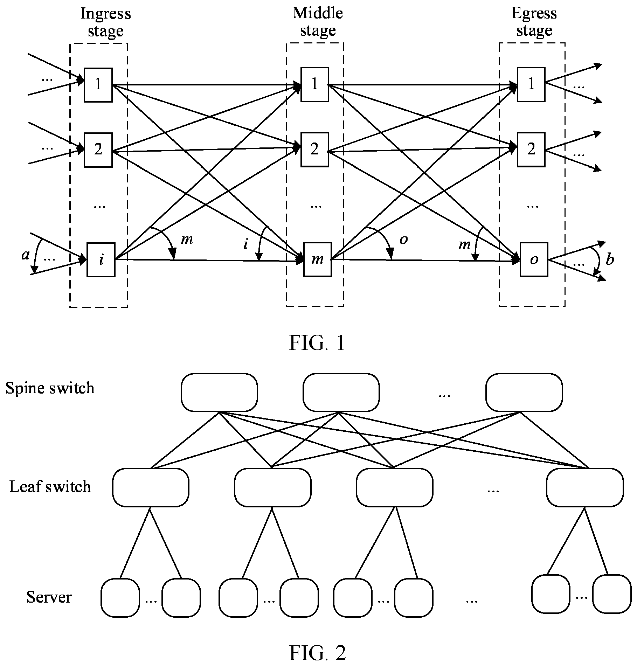

This mainly describes a structure of a multi-stage switched circuit network. A core of Clos is to use a plurality of small-scale and low-cost units to construct a complex and large-scale network and provide a non-blocking network. In an example, a simplest Clos network is used as an example. FIG. 1 is a diagram of a possible Clos network structure. A Clos network is of a three-stage interconnection architecture, including an ingress stage, a middle stage, and an egress stage. There are i forwarding units at the ingress stage, and each forwarding unit at the ingress stage includes a input ports and m output ports. There are m forwarding units at the middle stage. Each forwarding unit at the middle stage includes i input ports and o output ports. There are o forwarding units at the egress stage. Each forwarding unit at the egress stage includes m input ports and b output ports. After proper rearrangement, provided that $m \geq max(a, b)$, a non-blocking path (which is rearrangeable non-blocking) can always be found for any input to output.

(2) Spine-leaf network architecture (spine-leaf architecture):

The spine-leaf architecture is a data center network topology that includes two layers of switches: a spine layer and a leaf layer. The leaf layer includes access switches, and the switches at this layer are configured to aggregate traffic from servers. The switches at this layer are directly connected to switches or a network core at the spine layer. The switches at the spine layer are interconnected with all leaf switches in a full-mesh topology. The spine-leaf architecture is also a Clos architecture. Devices in the network architecture are basically for bidirectional traffic, and an input device is also an output device. Therefore, this architecture may be obtained by folding the three-stage Clos architecture along the middle stage, as shown in FIG. 2.
With reference to FIG. 2 and FIG. 1, it may be found that if a quantity (that is, corresponding to a in FIG. 1) of uplinks (that is, uplink ports) of each leaf switch is equal to a quantity (that is, corresponding to m in FIG. 1) of spine switches, and a quantity (that is, corresponding to b in FIG. 1) of downlinks (that is, downlink ports) of each spine switch is equal to a quantity of leaf switches, the architecture is a rearrangeable non-blocking Clos architecture. A convergence ratio of the leaf layer of the Clos architecture is 1: 1, that is, the convergence ratio is a quotient of the quantity of uplinks and a quantity of downlinks of each leaf switch. In this case, the Clos architecture has a rearrangeable non-blocking property.

(3) AI training:

In AI training, a plurality of computing nodes may be used to perform parallel computing to improve training efficiency. A parallel computing manner may include a data parallelism manner, a model parallelism manner, or a hybrid parallelism manner.

Data parallelism:

When a training data set is large, a plurality of computing nodes may be used to perform data parallelism to improve training efficiency. For example, a plurality of copies of a same model are deployed on different computing nodes. In addition, different training data subsets are allocated to different computing nodes. For example, assuming that a total quantity of computing nodes is K, the training dataset may be divided into K training data subsets, and then the K training data subsets are correspondingly configured for the K computing nodes for iterative training. After completing parallel training, the computing nodes combine computing results of the K computing nodes in a specific algorithm operation manner. The foregoing process may be referred to as data parallelism.
In data parallelism, network models on the computing nodes are the same, and the only difference is that the network models use different input data (that is, different training data subsets). After all the computing nodes complete gradient calculation to obtain gradient calculation data, an average value of the gradient calculation data needs to be calculated for each computing node. This operation is usually referred to as all reduce, and all reduce may also be referred to as data integration or gradient reduction.
all reduce may be understood as a type of algorithm, which aims to integrate (reduce) data of different computing nodes and then distribute an integration result to the computing nodes. During AI application, data is usually a vector or a matrix, and common integration manners include summation (Sum), obtaining a maximum value (Max), obtaining a minimum value (Min), and the like.

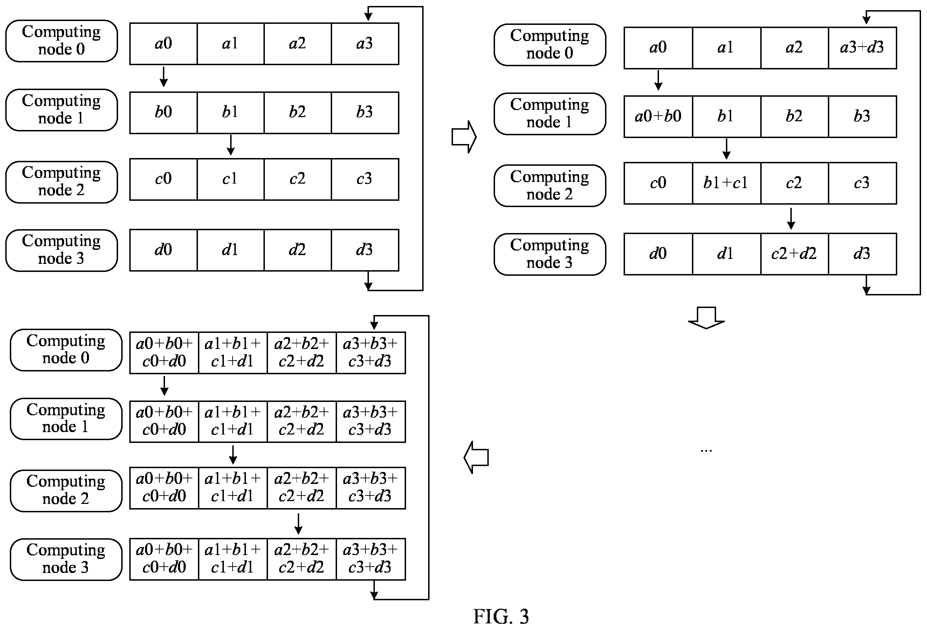

In the data parallelism training manner, all reduce needs to be performed for each iteration. A possible all reduce algorithm is: forming the K computing nodes into a logical ring. The logical ring may be understood as arranging the K computing nodes in a ring shape. Currently, a topology structure of the K computing nodes is not necessarily ring-shaped. An all reduce procedure is executed. FIG. 3 is a diagram of a possible data integration procedure. In FIG. 3, four computing nodes are used as an example, which are respectively computing nodes 0 to 3. First, each computing node divides data on which all reduce needs to be performed into K pieces of data, and sends the K pieces of data to a next-hop computing node on the logical ring hop by hop along a sequence of the logical ring by using K times of data sending, until each computing node has one piece of data. After obtaining data sent by other nodes, each computing node may perform data integration to obtain an all reduce result. Then, K all reduce results are sent to the next-hop computing node on the logical ring hop by hop by using K times of data sending again, until each computing node has complete K all reduce results.

Model parallelism:

With the emergence of a huge model, a single huge model cannot be accommodated in a single computing node. Therefore, the single huge model needs to be split into a plurality of submodels, and the submodels need to be deployed on different computing nodes. This computing manner in which a single model is split into different submodels and deployed on different computing nodes is called model parallelism. In model parallelism, different computing nodes are responsible for different parts of a network model and train a same batch of data jointly, and intermediate data in this computing process is transferred between different computing nodes.

Hybrid parallelism:

Hybrid parallelism is a manner of combining data parallelism and model parallelism in a model training process. A network model may be sliced, and specifically, sliced into different submodels. Then, different parameters are selected for different submodels. When a training dataset is used to train the model, it may be understood that each sample is used to train only a part of the network model (for example, a submodel), that is, each sample is used to train only some parameters, and other submodels (for example, other network layers) in the model are a plurality of copies of the same network model. For example, the hybrid parallelism manner is used by a mixture of experts (MOE) model. In the MOE model, for any input, only a small part of a network is used to calculate an output of the input. In a case of having a plurality of sets of weights, the network may select a set of weights to be used by using a gating mechanism during inference, which may obtain more parameters without increasing computing costs. Each group of weights is called an "expert (expert)". Ideally, the network can learn to assign a dedicated computing task to each expert. Different experts may be hosted on different computing nodes. When data transmission is performed between computing nodes, data may be exchanged in an all-to-all mode.

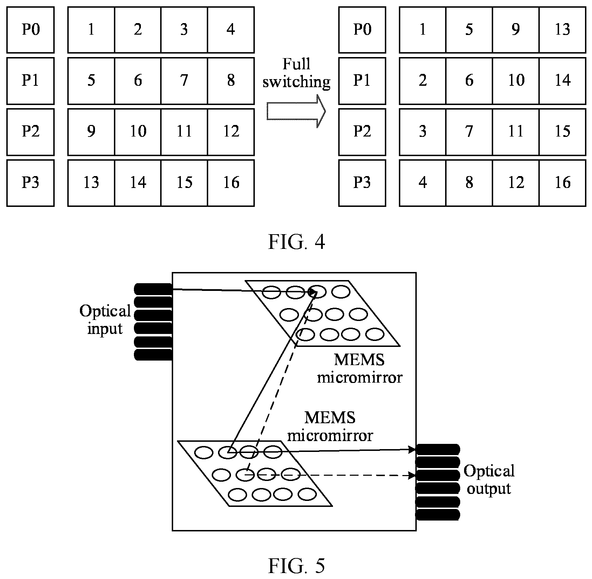

The all-to-all mode is a full switching mode. When the all-to-all mode is used, each computing node sends data to any other computing node, and the node also receives data from any node. A receive buffer and a send buffer of each computing node are an array that is divided into several data blocks. A specific operation of all-to-all is: sending a $j^{th}$ block of data in the send buffer of a computing node i to a computing node j, and placing, by the computing node j, the data block received from the computing node i at an $i^{th}$ block position of the receive buffer of the computing node j, as shown in FIG. 4.

(4) Optical switching:

A core function of optical cross-connect (Optical Cross-Connect, OXC) is to implement an optical channel connection between one or more input optical fiber ports and a plurality of output optical fiber ports. By using different switching control mechanisms, an optical signal input from an optical fiber port may be switched from being output from an optical fiber port to being output from another optical fiber port, that is, switching of an optical signal between output ports is implemented. For example, a port optical cross-connect technology may be classified into two types: micro-electro-mechanical system (Micro-Electro-Mechanical System, MEMS) OXC optical fiber port switching and switch port switching.

For example, FIG. 5 is a principle diagram of a MEMS OXC device. As shown in FIG. 5, an optical signal received by a MEMS OXC device is input from an optical input port, reflected by a MEMS micromirror array twice, and output from an optical output port. An optical signal may be deflected by adjusting an angle of a MEMS micromirror, so that the optical signal is output from different optical output ports, thereby implementing optical path switching. The MEMS OXC device has a large quantity of optical switch ports, which are arranged by using MEMS micromirrors of a two-dimensional planar array, and a quantity of the ports may reach a magnitude of 400 to 1000. An optical signal is not processed in the MEMS OXC device, so that no extra delay is introduced and the MEMS OXC device is transparent to a rate of the optical signal.

A device based on switch port switching may be referred to as an optical switch switching device. The optical switch switching device supports point-to-point strict non-blocking switching, and may have a switching speed at a ns-$\mu$s magnitude. The optical switch switching device may provide three optical cross-connect specifications: 1$\times$N, N$\times$N, and M$\times$P (M$\neq$P). The optical switch switching device is implemented by using a plurality of optical switches.

In embodiments of this application, "a plurality of" means two or more than two. "And/or" describes an association relationship between associated objects, and indicates that three relationships may exist. For example, A and/or B may represent the following three cases: Only A exists, both A and B exist, and only B exists. In addition, in the descriptions of this application, terms such as "first" and "second" are used only for the purpose of distinguishing descriptions, and cannot be understood as indicating or implying relative importance, or as indicating or implying a sequence.

It may be learned based on the background that, currently, an electrical switching multi-level CLOS fat-tree networking architecture is used to implement communication between computing nodes. Specifically, electrical switches need to store and forward data hop by hop. However, this manner inevitably causes problems of hash conflict and traffic imbalance, leading to a packet loss caused by congestion, and increasing communication time between computing nodes.

Based on this, embodiments of this application provide an AI computing system and method, to avoid an increase in communication time between computing nodes caused by the problems of hash conflict and traffic imbalance.

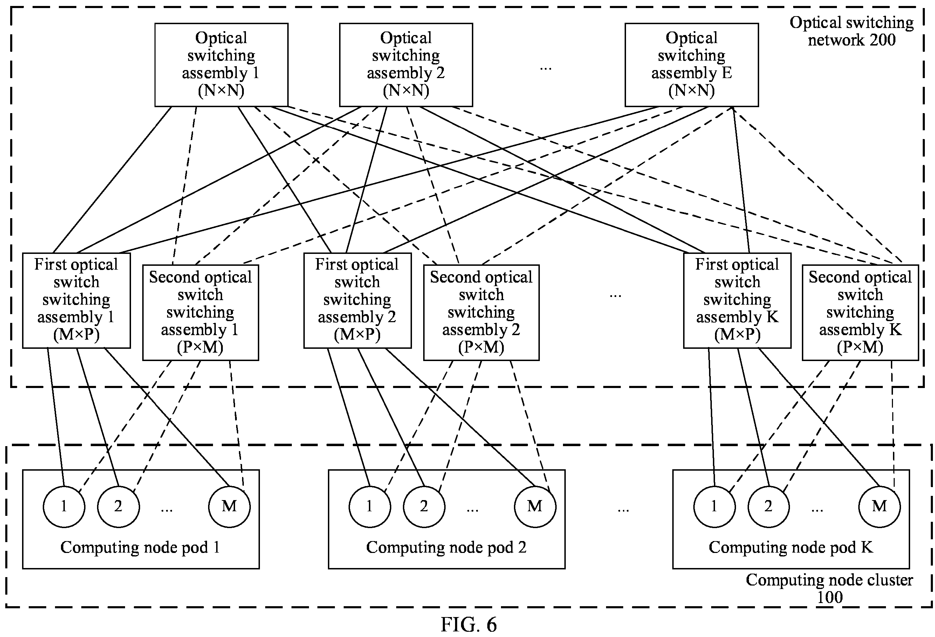

FIG. 6 is a diagram of a structure of an AI computing system according to an embodiment of this application. The AI computing system includes a computing node cluster 100 and an optical switching network 200. The computing node cluster includes K computing node pods (pods), which are respectively a computing node pod 1 to a computing node pod K. The computing node pod may also be referred to as a computing node cluster. Each computing node pod includes M computing nodes, which are respectively a computing node 1 to a computing node M. Each computing node includes an input port and an output port.

Each computing node may include one or more processing units. The processing unit may be, for example, an application-specific integrated circuit (application-specific integrated circuit, ASIC), for example, a central processing unit (central processing unit, CPU), a tensor processing unit (Tensor processing unit, TPU) used for a machine learning computing task, a graphics processing unit (graphics processing unit, GPU), a neural-network processing unit (neural-network processing unit, NPU), or another type of processing unit.

In an example, a computing node pod may be a single-GPU server, a multi-GPU server, a group including a plurality of servers, or a super node. A server or a super node is a core of an AI infrastructure. One or more GPUs may be deployed on one server, and the GPU is an actual entity of AI computing.

The optical switching network includes K first optical switch switching assemblies, K second optical switch switching assemblies, and F optical switching assemblies. In some scenarios, the optical switching network may be deployed through a Clos network architecture or a spine-leaf network architecture. The first optical switch switching assembly may be understood as an optical switch switching assembly at an ingress stage, and the second optical switch switching assembly may be understood as an optical switch switching assembly at an egress stage. The optical switch switching assembly may use one or more optical switch switching devices with a switching speed at a ns-$\mu$s magnitude. The optical switch switching assembly may also be referred to as a fast optical switching block (block), or may be referred to as an optical switch-based fast optical switching block, or certainly may have another name. This is not specifically limited in embodiments of this application. All optical switch switching devices with a switching speed (or a faster switching speed) at a ns-$\mu$s magnitude are applicable to this application. However, it should be noted that, in some scenarios, when a requirement for a switching speed is low, the optical switch switching assembly may alternatively use another optical switch switching device with a low speed, or the switching speed of the optical switch switching device is not limited. The optical switching assembly may also be understood as an optical switching assembly at a middle stage. For example, the optical switching assembly may use a port MEMS OXC optical cross-connect, a fast optical switch switching device, a wavelength selective OXC, or the like.

For ease of description, quantities and specifications of assemblies (or devices) are described in Table 1 below.

Table 1

| Assembly (or device) | Quantity | Specification |
|---|---|---|
| Computing node pod | K | None |
| Computing node in the computing node pod | M | None |
| First optical switch switching assembly | K | M$\times$P |
| Second optical switch switching assembly | K | P$\times$M |
| Optical switching assembly | F | N$\times$N |

With reference to Table 1, each first optical switch switching assembly in the K first optical switch switching assemblies includes M input ports and P output ports. The specification of the first optical switch switching assembly is M×P. Each second optical switch switching assembly in the K second optical switch switching assemblies includes P input ports and M output ports. The specification of the second optical switch switching assembly is P×M. Each optical switching assembly in the F optical switching assemblies includes N input ports and N output ports. The specification of each optical switching assembly is N×N. K, M, F, and P are all positive integers. K, M, F, and P satisfy that K*P=F*N.

M*K output ports included in M*K computing nodes in the computing node cluster are connected to M*K input ports included in the K first optical switch switching assemblies in one-to-one correspondence. M*K input ports included in the M*K computing nodes are connected to M*K output ports included in the K second optical switch switching assemblies in one-to-one correspondence. For example, M output ports included in M computing nodes in the computing node pod 1 are connected to M input ports of a first optical switch switching assembly 1 in one-to-one correspondence. M input ports included in the M computing nodes in the computing node pod 1 are connected to M output ports of a second optical switch switching assembly 1 in one-to-one correspondence. In some embodiments, a connection between the computing node and the first optical switch switching assembly or the second optical switch switching assembly may be an optical connection. The computing node supports input of an optical signal. For example, the computing node includes an optical-to-electrical converter and an electrical-to-optical converter.

P*K output ports included in the K first optical switch switching assemblies are connected to F*N input ports included in the F optical switching assemblies in one-to-one correspondence. F*N output ports included in the F optical switching assemblies are connected to P*K input ports included in the K second optical switch switching assemblies in one-to-one correspondence. For example, F and P may satisfy that F≤P. For example, when F=P, different output ports in each first optical switch switching assembly are connected to different optical switching assemblies at the middle stage; and different input ports in each second optical switch switching assembly are connected to different optical switching assemblies at the middle stage. For another example, when F<P, at least F output ports in each first optical switch switching assembly are connected to different optical switching assemblies, and at least F output ports in each second optical switch switching assembly are connected to different optical switching assemblies. For example, when F=P/2, every two output ports of the P output ports included in each first optical switch switching assembly may be used as one group; output ports belonging to different groups in each first optical switch switching assembly are connected to different optical switching assemblies at the middle stage; and output ports belonging to a same group in each first optical switch switching assembly are connected to a same optical switching assembly at the middle stage. For example, when F=P/2, every two input ports of the P input ports included in each second optical switch switching assembly may be used as one group; input ports belonging to different groups in each second optical switch switching assembly are connected to different optical switching assemblies at the middle stage; and input ports belonging to a same group in each second optical switch switching assembly are connected to a same optical switching assembly at the middle stage.

In some embodiments, the P output ports included in each first optical switch switching assembly may be evenly connected to the F optical switching assemblies at the middle stage.

In an example, the following condition 1 may be met when the P*K output ports in the K first optical switch switching assemblies are connected to the F*N input ports included in the F optical switching assemblies.

Condition 1: i represents an index of the first optical switch switching assembly, and j represents an index (index) of an output port of the first optical switch switching assembly. i=1...K, and j=1...P. An output port j of a first optical switch switching assembly i is connected to an input port n of an optical switching assembly whose index is m.

$$m = \left\lfloor \left((j-1)*K+i\right)\big/_N \right\rfloor + 1, \text{ and } n = \left((j-1)*K+i\right)\%N + 1,$$

where

$\llcorner \lrcorner$ represents a rounding down operation, $\llcorner \lrcorner$ may alternatively be represented as floor( ), and A%B represents A modulo B.

In some other embodiments, each optical switching assembly of the F optical switching assemblies at the middle stage include N input ports and N output ports. The N input ports are evenly connected to the K M×P first optical switch switching assemblies at the ingress stage. The N output ports are evenly connected to the K P×M second optical switch switching assemblies at the egress stage.

In an example, the following condition 2 may be met when the N input ports in each optical switching assembly at the middle stage are evenly connected to the K first optical switch switching assemblies at the ingress stage.

Condition 2:

a=1...F, and a represents an index of an $a^{th}$ optical switching assembly at the middle stage. b=1...N, and b represents an index of the input port of the optical switching assembly at the middle stage. An input port b of the $a^{th}$ optical switching assembly at the middle stage is connected to an output port *r* of a first optical switch switching assembly *h* at the ingress stage.

$$r = \left\lceil \frac{((a-1) * N + b)}{K} \right\rceil + 1, \text{ and } h = \big((a-1) * N + b\big)\% K + 1.$$

In another example, the following condition 3 may be met when the N input ports in each optical switching assembly at the middle stage are evenly connected to the K second optical switch switching assemblies at the egress stage.

Condition 3:

a=1...F, and a represents an index of an $a^{th}$ optical switching assembly at the middle stage. b=1...N, and b represents an index of the input port of the optical switching assembly at the middle stage. An input port b of the $a^{th}$ optical switching assembly at the middle stage is connected to an output port g of a second optical switch switching assembly *l* at the egress stage.

$$g = \left\lceil \frac{((a-1) * N + b)}{K} \right\rceil + 1, \text{ and } l = \big((a-1) * N + b\big)\% K + 1.$$

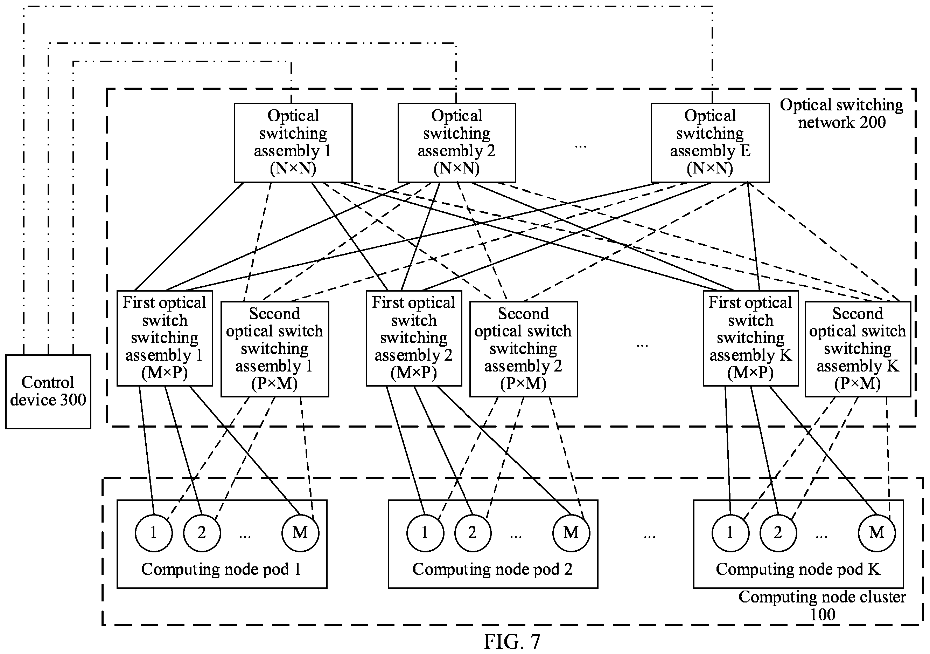

In some possible implementations, the AI computing system may further include a control device 300. FIG. 7 is a diagram of a structure of another AI computing system according to an embodiment of this application. The control device 300 is configured to configure, based on a communication mode used by the M*K computing nodes to complete an artificial intelligence AI data computing task, communication links between P*K output ports included in the K first optical switch switching assemblies and P*K input ports included in the K second optical switch switching assemblies in the optical switching network. For example, the control device 300 may configure, based on the communication mode, cross links between the input ports and the output ports of the F optical switching assemblies at the middle stage in the optical switching network. In some possible scenarios, after initial configuration is performed on the cross links between the input ports and the output ports of the F optical switching assemblies at the middle stage in the optical switching network, switching may not be performed on the cross links between the input ports and the output ports of the F optical switching assemblies at the middle stage unless in a specific scenario. The specific scenario may be, for example, a scenario such as a job task or fault operation and maintenance that is insensitive to switching time.

For example, the control device 300 obtains an AI data computing task, and may split the AI data computing task into a plurality of subtasks and deploy the plurality of subtasks on the computing nodes. The AI data computing task is split since the AI data computing task may be a task with a large computing amount and a large data amount. Therefore, the splitting may be first performed on the AI data computing task to obtain subtasks. A specific splitting manner is not limited herein. For example, the task may be split in a manner in which the AI data computing task adapts to a quantity or performance of computing nodes in the AI computing system.

The communication mode of the AI data computing task may include one or more of a parallelism mode of computing nodes, a manner of transmitting data (or traffic) between computing nodes, and the like. The parallelism mode may be a data parallelism mode, a model parallelism mode, or a hybrid parallelism mode. In the model parallelism mode, a manner in which a network model is split horizontally may be used, or a manner in which a network model is split vertically may be used. The manner of transmitting data (or traffic) between computing nodes may be determined based on different set communication operators. The set communication operator may be, for example, all-to-all, all reduce, or the like.

Communication traffic or data in an AI scenario may be regular or periodic by using clearly defined set communication operators and parallelism modes. For example, in AI network model training, the communication mode in each iteration is the same.

In some possible application scenarios, a user may generate an AI data computing task through user equipment, and send the AI data computing task to the AI computing system. The AI computing system may receive, through a communication network, the AI data computing task sent by the user equipment. The communication network may be, for example, a local area network, a wide area network, the Internet, a mobile network, or a combination thereof. The AI data computing task may be a task of training a network model, a task of using a network model, or the like. A scale of a computing node cluster required by the AI data computing task may also be specified by the user. In this application, the scale of the computing node cluster required by the AI data computing task is M*K.

The control device may be understood as a centralized controller, and may be used as a scheduling center to schedule resources on a control plane. In some embodiments, the control device may store information such as a component interconnection topology and a resource occupation status of the AI computing system.

The control device may include one or more processors. The processor may be a general-purpose processor, a dedicated processor, or the like. For example, the processor may be a baseband processor or a central processing unit. The baseband processor may be configured to process a communication protocol and communication data. The central processing unit may execute a software program to process data of the software program. The control device may include a transceiver, to input (receive) and output (send) a signal.

The control device may include one or more processors, and the one or more processors may implement resource scheduling and optical switching network control or configuration. Optionally, the processor may further implement another function in addition to the method shown in the foregoing embodiments. Optionally, in a design, the processor may execute instructions, so that the control device performs resource scheduling and optical switching network control or configuration. The instructions may be all or partially stored in the processor, or the instructions may be all or partially stored in a memory coupled to the processor. In still another possible design, the control device may also include a circuit, and the circuit may implement resource scheduling and optical switching network control or configuration.

In still another possible design, the control device may include one or more memories having instructions stored therein, and the instruction may be run on the processor, so that the control device performs resource scheduling and optical switching network control or configuration. Optionally, the memory may further store data. Optionally, the processor may alternatively store instructions and/or data. For example, the one or more memories may store information such as a component interconnection topology and a resource occupation status of the AI computing system. The processor and the memory may be separately disposed, or may be integrated.

It should be noted that, the processor in embodiments of this application may be an integrated circuit chip, and has a signal processing capability. In an implementation process, steps in the foregoing method embodiments can be implemented by using a hardware integrated logic circuit in the processor, or by using instructions in a form of software. The foregoing processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component. The processor may implement or perform the methods, steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in a decoding processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory in embodiments of this application may be a volatile memory or a non-volatile memory, or may include both a volatile memory and a non-volatile memory. The non-volatile memory may be a read-only memory (ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (RAM) that is used as an external cache. Through examples but not limitative descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory in the system and the method described in this specification is intended to include, but not limited to, these memories and any memory of another suitable type.

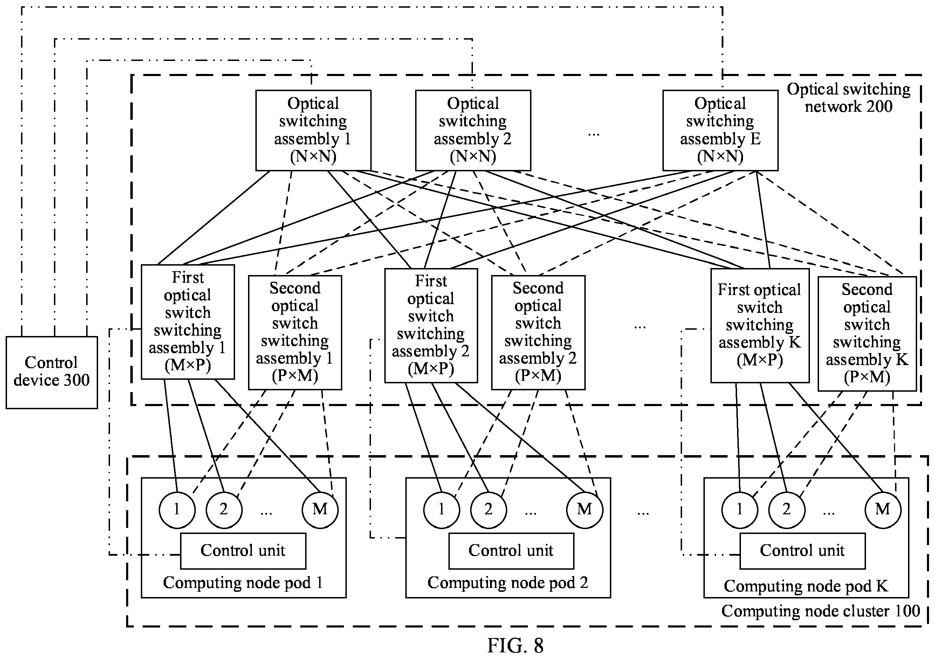

In some possible embodiments, each computing node pod in the K computing node pods may include a control unit. FIG. 8 is a diagram of a structure of another possible AI computing system according to an embodiment of this application. Using a first computing node pod as an example, the first computing node pod is any computing node pod in the K computing node pods. The first computing node pod includes a control unit. In a possible manner, the control unit may control switching of a cross link between an input port of a first optical switch switching assembly connected to the first computing node pod and an output port. In this manner, data of each computing node may be controlled to be sent to other different computing nodes. Refer to FIG. 8. A computing node 1 in a computing node pod 1 is used as an example. A control unit in the computing node 1 in the computing node pod 1 may control a cross link between an input port of a first optical switch switching assembly 1 and an output port, to control a destination computing node of data sent by the computing node 1.

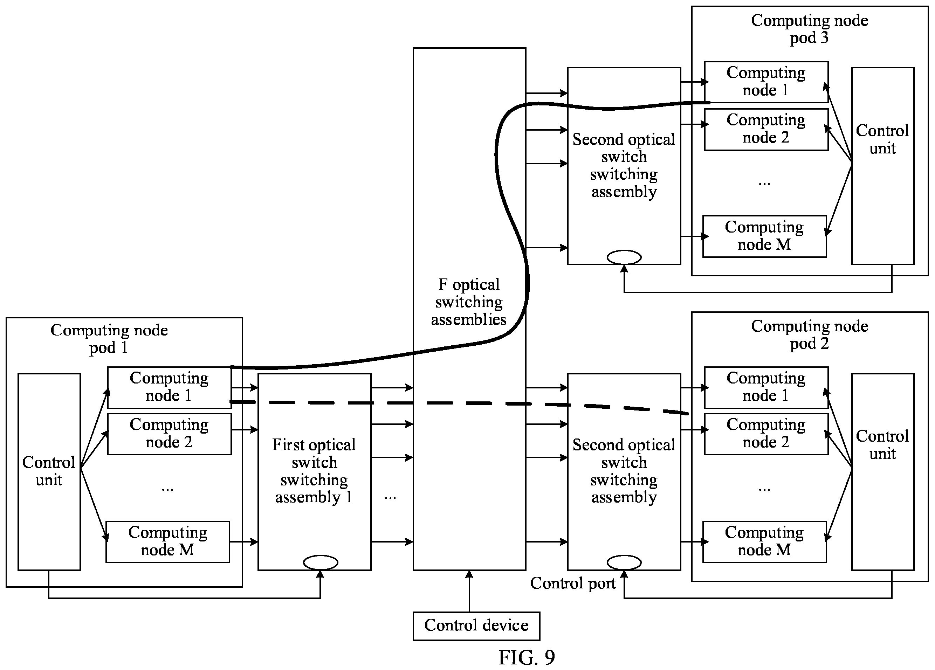

For example, FIG. 9 is a diagram in which a computing node controls an optical switch switching assembly at an ingress stage to switch a cross link according to an embodiment of this application. After the computing node 1 in the computing node pod 1 sends computing data 1 to a computing node 2 in a computing node pod 2 over a first communication link in the optical switching network, when the computing node 1 in the computing node pod 1 needs to continue to send computing data 2 to a computing node 1 in a computing node pod 3, the computing node 1 in the computing node pod 1 controls, through the control unit, switching of the cross link between the input port of the first optical switch switching assembly 1 and the output port, so that the data of the computing node 1 is sent to different destination computing nodes. For example, the input port that is in the first optical switch switching assembly 1 and that is connected to the computing node 1 in the computing node pod 1 is a first input port. A cross link between the first input port and a first output port corresponds to the first communication link, that is, the destination computing node of the optical switching network is the computing node 2 in the computing node pod 2. A cross link between the first input port and a second output port corresponds to a second communication link, that is, the destination computing node of the optical switching network is the computing node 1 in the computing node pod 3. Based on this, the control unit sends a control signal to a first optical switch switching assembly 1, so that the first optical switch switching assembly 1 switches the cross link between the first input port and the first output port to the cross link between the first input port and the second output port. Therefore, the computing node 1 in the computing node pod 1 sends the computing data 2 to the computing node 1 in the computing node pod 3 over the second communication link.

In another possible manner, the control unit may control switching of a cross link between an input port of a second optical switch switching assembly connected to the first computing node pod and an output port. In this manner, each computing node may be controlled to receive data from other different computing nodes. Refer to FIG. 8. A computing node 1 in a computing node pod 1 is used as an example. A control unit in the computing node 1 in the computing node pod 1 may control a cross link between an input port of a second optical switch switching assembly 1 and an output port, to control the computing node 1 to receive data from another computing node.

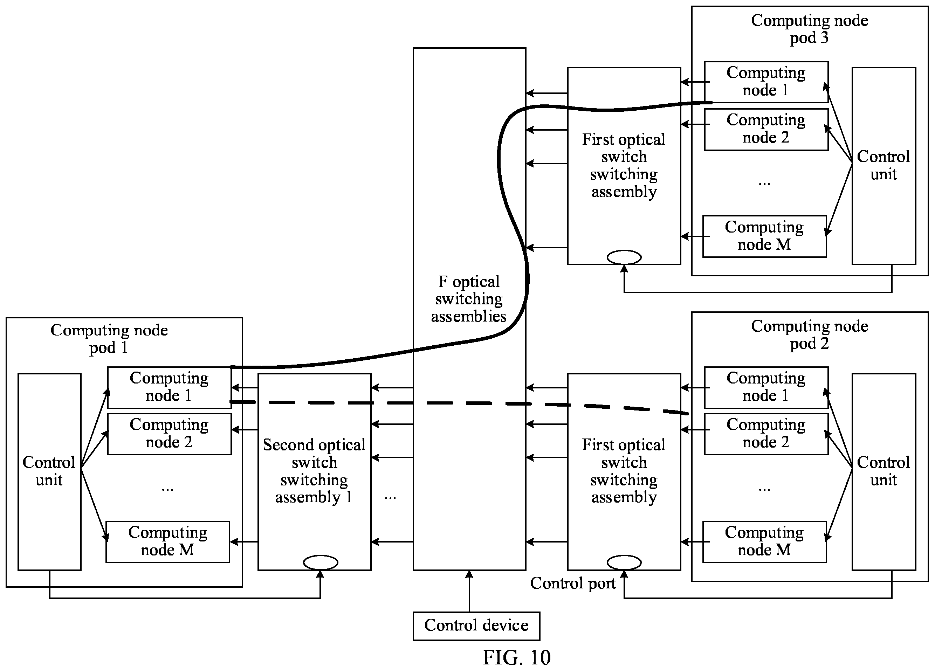

For example, FIG. 10 is another diagram in which a computing node controls an optical switch switching assembly at an ingress stage to switch a cross link according to an embodiment of this application. After the computing node 1 in the computing node pod 1 receives computing data a sent from a computing node 2 in a computing node pod 2 over a third communication link in the optical switching network, when the computing node 1 in the computing node pod 1 needs to continue to receive computing data b sent from a computing node 1 in a computing node pod 3, the computing node 1 in the computing node pod 1 controls, through the control unit, switching of the cross link between the input port of the second optical switch switching assembly 1 and the output port, so that the computing node 1 receives computing data from different source computing nodes. For example, the input port that is in the second optical switch switching assembly 1 and that is connected to the computing node 1 in the computing node pod 1 is a second input port. A cross link between the second input port and a third output port corresponds to the third communication link, that is, the source computing node of the optical switching network is the computing node 2 in the computing node pod 2. A cross link between the second input port and a fourth output port corresponds to a fourth communication link, that is, the source computing node of the optical switching network is the computing node 1 in the computing node pod 3. Based on this, the control unit sends a control signal to the second optical switch switching assembly 1, so that the second optical switch switching assembly 1 switches the cross link between the second input port and the third output port to the cross link between the second input port and the fourth output port. Therefore, the computing node 1 in the computing node pod 1 receives the computing data b from the computing node 1 in the computing node pod 3 over the fourth communication link.

In still another possible manner, the control unit may control switching of a cross link between an input port of a first optical switch switching assembly connected to the first computing node pod and an output port, and control switching of a cross link between an input port of a second optical switch switching assembly connected to the first computing node pod and an output port. In this manner, data of each computing node may be controlled to be sent to other different computing nodes. Refer to FIG. 8. A computing node 1 in a computing node pod 1 is used as an example. A control unit in the computing node 1 in the computing node pod 1 may control a cross link between an input port of a first optical switch switching assembly 1 and an output port, to control the computing node 1 to receive data from another computing node; and the control unit in the computing node 1 in the computing node pod 1 may further control a cross link between an input port of a second optical switch switching assembly 1 and an output port, to control the computing node 1 to receive data from another computing node.

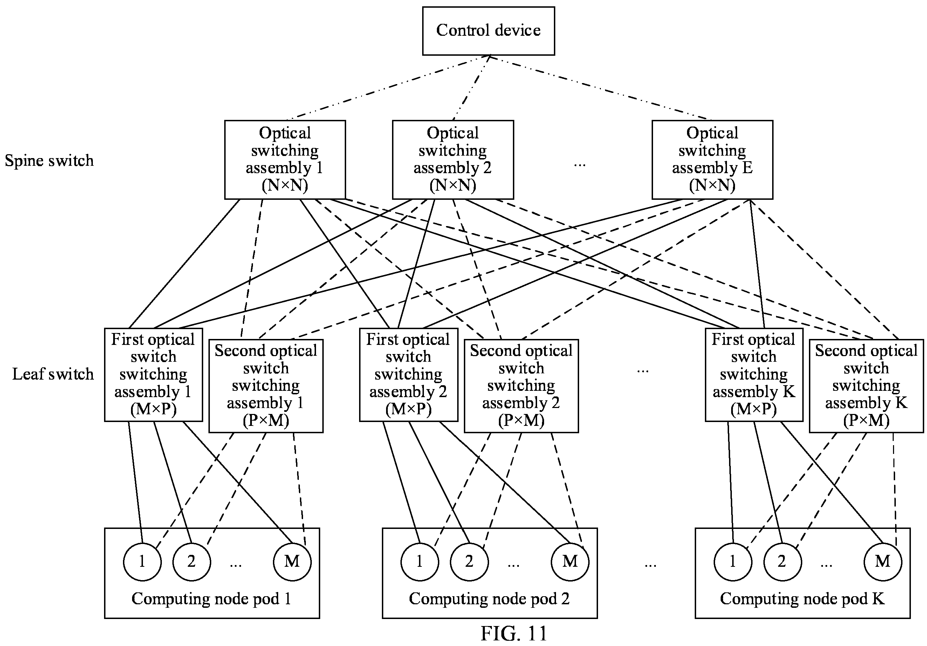

In some possible application scenarios, a first optical switch switching assembly and a second optical switch switching assembly that are connected to a same computing node pod may be deployed on a same optical switch, or may be deployed on different optical switches. Different optical switching assemblies may also be deployed on different optical switches. In some embodiments, a first optical switch switching assembly and a second optical switch switching assembly that are connected to a same computing node pod are deployed on a same optical switch, and different optical switching assemblies are deployed on different optical switches. These optical switches may be deployed based on a spine-leaf network structure. Refer to FIG. 11. An optical switch on which a first optical switch switching assembly and a second optical switch switching assembly are deployed is a leaf-layer optical switch, and an optical switch on which an optical switching assembly is deployed is a spine-layer optical switch.

In embodiments of this application, the first optical switch switching assembly and/or the second optical switch switching assembly may be implemented through an optical switch switching device whose specification is M×P, or may be implemented through a plurality of optical switch switching devices with a small specification. An N×N optical switching assembly at a middle stage may be implemented through an optical switching device whose specification is N×N, or may be implemented through a plurality of optical switching devices with a small specification.

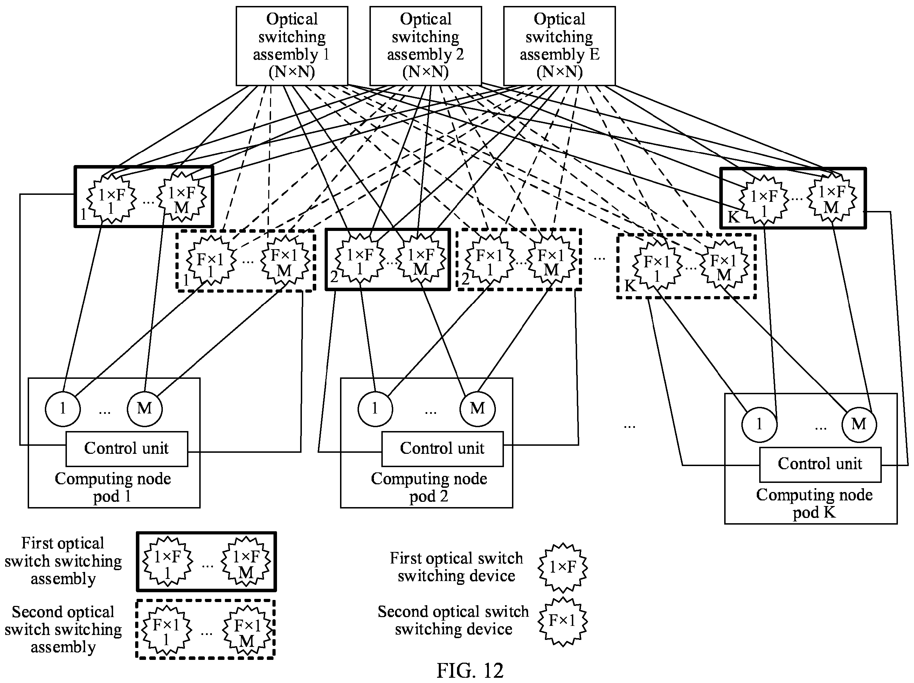

FIG. 12 is a diagram of a structure of still another AI computing system according to an embodiment of this application. In FIG. 12, an example in which both the first optical switch switching assembly and the second optical switch switching assembly include a plurality of optical switch switching devices is used. For example, the K first optical switch switching assemblies respectively include M optical switch switching devices whose specification is 1×F; and the K second optical switch switching assemblies respectively include M optical switch switching devices whose specification is F×1. For ease of differentiation, the optical switch switching device included in the first optical switch switching assembly is referred to as a first optical switch switching device, and the optical switch switching device included in the second optical switch switching assembly is referred to as a second optical switch switching device. The first optical switch switching device includes one input port and F output ports. The second optical switch switching device includes F input ports and one output port. M and F satisfy that M*F=P.

Refer to FIG. 12. An M×P first optical switch switching assembly at the ingress stage is an optical switch switching matrix at the ingress stage formed by M 1×F first optical switch switching devices. The M first optical switch switching devices at the ingress stage are in one-to-one correspondence with the M computing nodes in the computing node pod. In other words, one computing node is connected to a unique input port of one 1×F first optical switch switching device at the ingress stage. F output ports of each 1×F first optical switch switching device at the ingress stage are connected to F optical switching assemblies whose specification is N×N at the middle stage. M and K satisfy that M*K=N.

A P×M second optical switch switching assembly at the egress stage is an optical switch switching matrix at the egress stage formed by M F×1 second optical switch switching devices. The M second optical switch switching devices at the egress stage are in one-to-one correspondence with the M computing nodes in the computing node pod. In other words, an output port of one computing node is connected to a unique output port of one F×1 second optical switch switching device at the egress stage. F input ports of each F×1 second optical switch switching device at the egress stage are connected to F optical switching assemblies whose specification is N×N at the middle stage. M and K satisfy that M*K=N.

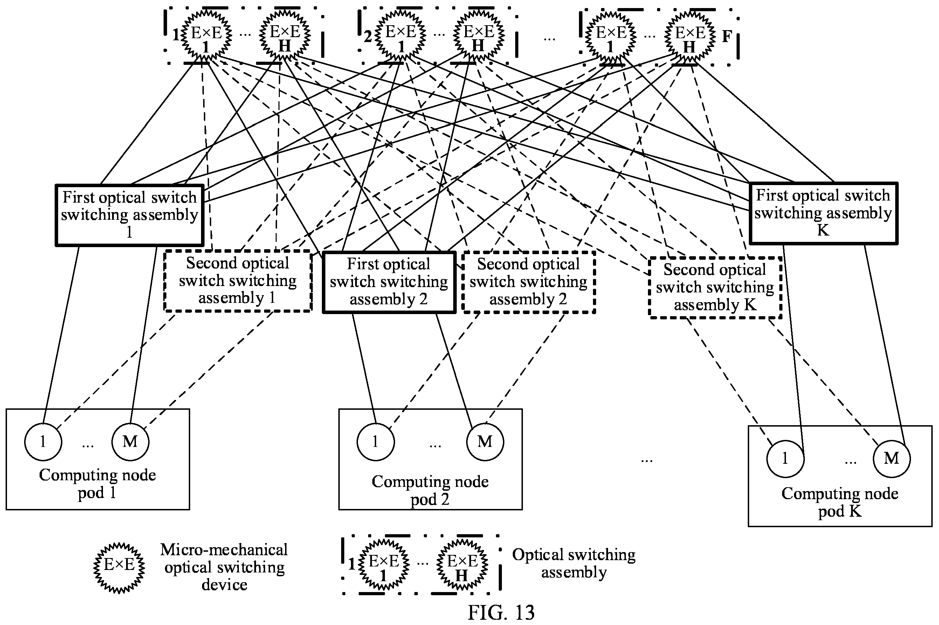

FIG. 13 is a diagram of a structure of still another AI computing system according to an embodiment of this application. In FIG. 13, the N×N optical switching assembly at the middle stage is implemented through a plurality of optical switching devices with a small specification. For example, the optical switching device is a micro-mechanical optical switching device (MEMS OXC). Each N×N optical switching assembly includes H micro-mechanical optical switching devices whose specification is E×E. H*E=N. 1≤H≤M. In FIG. 13, an example in which the first optical switch switching assembly is an M×P first optical switch switching device and the second optical switch switching assembly is a P×M second optical switch switching device is used. P output ports of each first optical switch switching device are evenly connected to H*F micro-mechanical optical switching devices. F≤P. Optionally, H*F=P, and the P output ports of each first optical switch switching device are connected to different micro-mechanical optical switching devices. In addition, it should be noted that different optical switching assemblies at the middle stage may include a same quantity of optical switching devices with a same specification or different quantities of optical switching devices with different specfications. This is not specifically limited in embodiments of this application. In the optical switching network shown in FIG. 13, fast switching communication between one computing node and a maximum of other F*M-1 computing nodes may be supported.

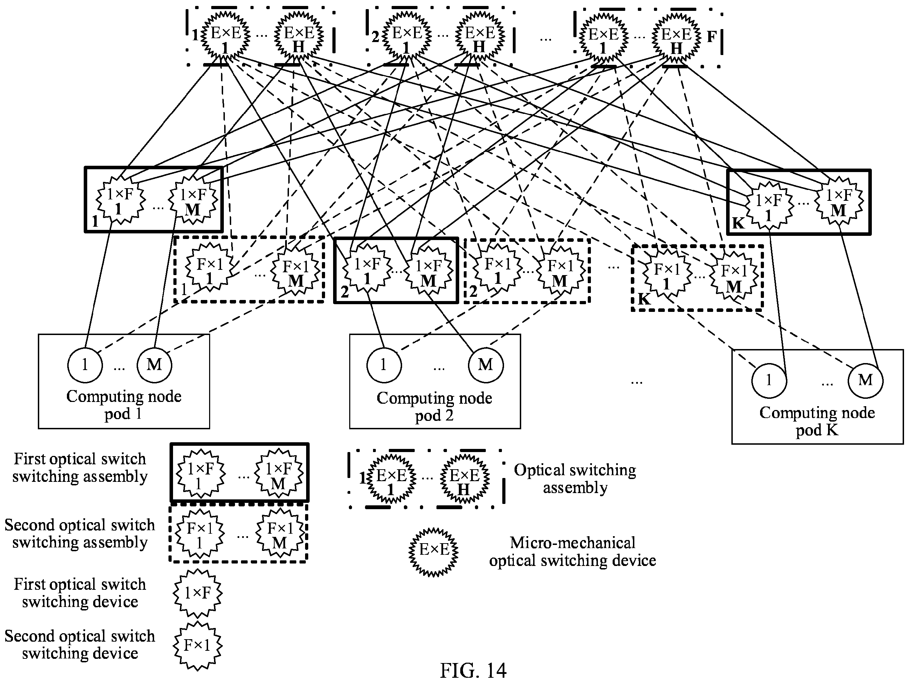

FIG. 14 is a diagram of a structure of still another AI computing system according to an embodiment of this application. In FIG. 14, the N×N optical switching assembly at the middle stage is implemented through a plurality of optical switching devices with a small specification. For example, the optical switching device is a micro-mechanical optical switching device (MEMS OXC). Each N×N optical switching assembly includes H micro-mechanical optical switching devices whose specification is E×E. H*E=N. In FIG. 14, an example in which an M×P first optical switch switching assembly at the ingress stage is M 1×F first optical switch switching devices and a P×M second optical switch switching assembly at the egress stage is M F×1 second optical switch switching devices is used.

The M 1×F first optical switch switching devices at the ingress stage are in one-to-one correspondence with the M computing nodes in the computing node pod. In other words, one computing node is connected to a unique input port of one 1×F first optical switch switching device at the ingress stage. F output ports of each 1×F first optical switch switching device at the ingress stage are connected to F optical switching assemblies at the middle stage. One output port of the first optical switch switching device is connected to the micro-mechanical optical switching device in one optical switching assembly at the middle stage. Each optical switching assembly at the middle stage includes H micro-mechanical optical switching devices, where 1≤H≤M, and each micro-mechanical optical switching device has E input ports and E output ports. The F output ports of each first optical switch switching device at the ingress stage are connected to micro-mechanical optical switching devices belonging to different optical switching assemblies at the middle stage. F input ports of each second optical switch switching device at the egress stage are connected to micro-mechanical optical switching devices belonging to different optical switching assemblies at the middle stage.

In an example, i=1...K and i represents an $i^{th}$ first optical switch switching assembly i at the ingress stage, j=1...M and j represents a $j^{th}$ 1×F first optical switch switching device at the ingress stage in the first optical switch switching assembly, and q represents a $q^{th}$ output port of a 1×F first optical switch switching device at the ingress stage. In this case, the $q^{th}$ output port of the $j^{th}$ 1×F first optical switch switching device j at the ingress stage of the $i^{th}$ first optical switch switching assembly i at the ingress stage is connected to a $(((j-1)*K+i)\%E)^{th}$ input port of a $(floor(((j-1)*K)/E)+1)^{th}$ micro-mechanical optical switching device at the middle stage of a $q^{th}$ optical switching assembly at the middle stage.

The output port of the micro-mechanical optical switching device at the middle stage is interconnected with the second optical switch switching assembly at the egress stage. The F input ports of each F×1 second optical switch switching device are connected to the output ports of the F optical switching assemblies at the middle stage, and one input port of the F input ports of the first optical switch switching device is interconnected to one micro-mechanical optical switching device in one optical switching assembly at the middle stage.

In an example, x=1...K and x represents an $x^{th}$ second optical switch switching assembly x at the egress stage, y=1...M and y represents a $y^{th}$ F×1 second optical switch switching device at the egress stage in the second optical switch switching assembly x, and z represents a $z^{th}$ output port of the F×1 second optical switch switching device at the egress stage. In this case, the $z^{th}$ output port of the $y^{th}$ F×1 second optical switch switching device at the egress stage of the $x^{th}$ second optical switch switching assembly at the egress stage is connected to a $(((y-1)*K+x)\%N)^{th}$ output port of a $(floor(((y-1)*K)/N)+1)^{th}$ micro-mechanical optical switching device at the middle stage of a $z^{th}$ optical switching assembly at the middle stage.

One output port of the F×1 second optical switch switching device at the egress stage is connected to one computing node. In other words, the M second optical switch switching devices at the egress stage in the second optical switch switching assembly are connected to the M computing nodes in the computing node pod in one-to-one correspondence.

The AI computing system shown in FIG. 14 supports free fast switching communication between one computing node and a maximum of computing nodes in F-1 other computing node pods.

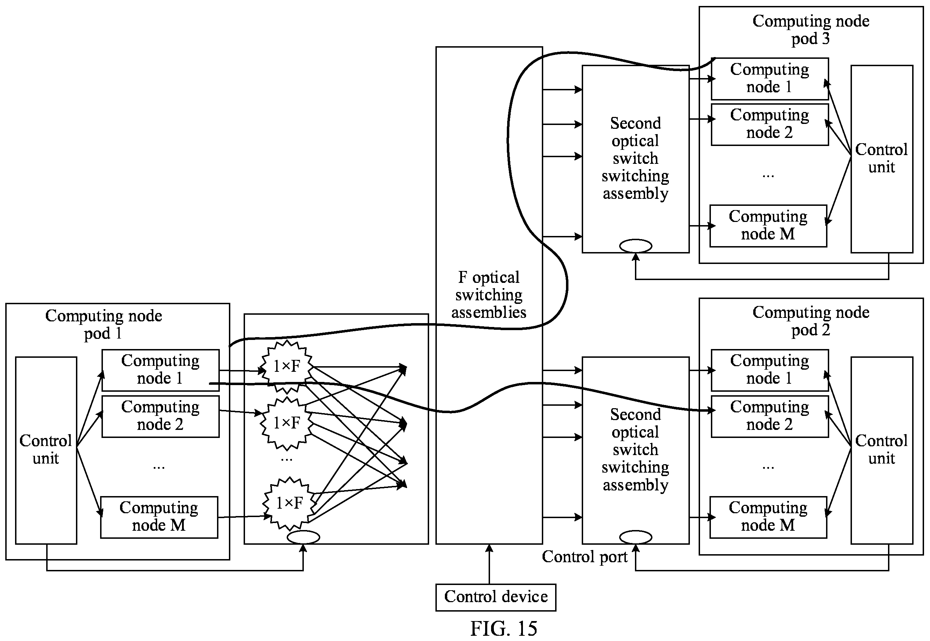

For example, FIG. 15 is still another diagram in which a computing node controls an optical switch switching assembly at an ingress stage to switch a cross link according to an embodiment of this application. After a computing node 1 in a computing node pod 1 sends computing data 1 to a computing node 2 in a computing node pod 2 over a communication link 1 in the optical switching network, when the computing node 1 in the computing node pod 1 needs to continue to send computing data 2 to a computing node 3 in a computing node pod 3, the computing node 1 in the computing node pod 1 controls, through a control unit, switching of a cross link between an input port of a first optical switch switching device 1 in a first optical switch switching assembly 1 and an output port, so that the data of the computing node 1 is sent to different destination computing nodes. For example, the input port that is in the first optical switch switching device 1 included in the first optical switch switching assembly 1 and that is connected to the computing node 1 in the computing node pod 1 is an input port a. A cross link between the input port a and an output port a in the first optical switch switching device 1 included in the first optical switch switching assembly 1 corresponds to the communication link 1, that is, the destination computing node of the optical switching network is the computing node 2 in the computing node pod 2. A cross link between the input port a and an output port b in the first optical switch switching device 1 included in the first optical switch switching assembly 1 corresponds to a communication link 2, that is, the destination computing node of the optical switching network is the computing node 3 in the computing node pod 3. Based on this, the control unit sends a control signal to the first optical switch switching assembly 1, so that the first optical switch switching assembly 1 switches the cross link between the input port a and the output port a to the cross link between the input port a and the output port b. Therefore, the computing node 1 in the computing node pod 1 sends the computing data 2 to the computing node 3 in the computing node pod 3 over the communication link 2.

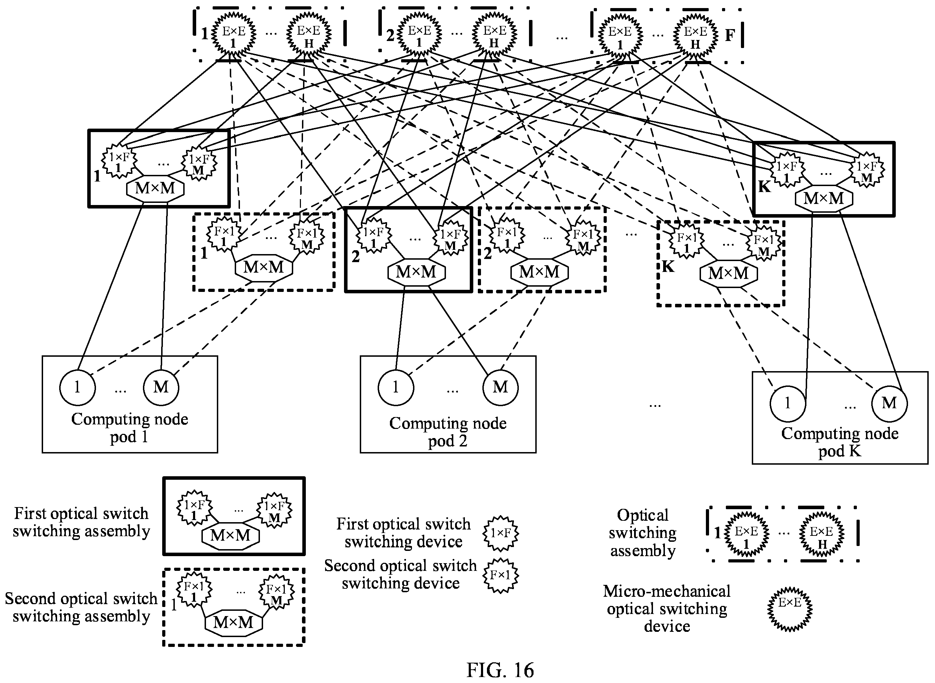

FIG. 16 is a diagram of a structure of still another AI computing system according to an embodiment of this application. In FIG. 16, the N×N optical switching assembly at the middle stage is implemented through a plurality of optical switching devices with a small specification. For example, the optical switching device is a micro-mechanical optical switching device (MEMS OXC). Each N×N optical switching assembly includes H micro-mechanical optical switching devices whose specification is E×E. H*E=N. In FIG. 16, an M×P first optical switch switching assembly at the ingress stage includes a first optical switch switching matrix including M 1×F first optical switch switching devices and includes one M×M third optical switch switching device, and a P×M second optical switch switching assembly at the egress stage includes a second optical switch switching matrix including M F×1 second optical switch switching devices and includes one M×M fourth optical switch switching device.

M output ports included in the third optical switch switching device are connected to M input ports of the first optical switch switching matrix in one-to-one correspondence, and M input ports included in the third optical switch switching device are connected to M output ports included in M computing nodes of a computing node pod that is correspondingly connected to the first optical switch switching assembly in one-to-one correspondence. M input ports included in the fourth optical switch switching device are connected to M output ports of the second optical switch switching matrix in one-to-one correspondence, and M output ports included in the fourth optical switch switching device are connected to M input ports included in M computing nodes of a computing node pod that is correspondingly connected to the second optical switch switching assembly in one-to-one correspondence.

For a connection relationship between the first optical switch switching assembly at the ingress stage, the second optical switch switching assembly at the egress stage, and the optical switching assembly at the middle stage, refer to related descriptions in FIG. 14. Details are not described herein again.

In FIG. 16, based on FIG. 14, an M×M optical switch switching device is added to the first optical switch switching assembly and the second optical switch switching assembly respectively. Compared with FIG. 14, a quantity of switching objects may be increased by M times. The AI computing system provided in FIG. 16 supports fast switching communication between one computing node and a maximum of other F*M-1 computing nodes.

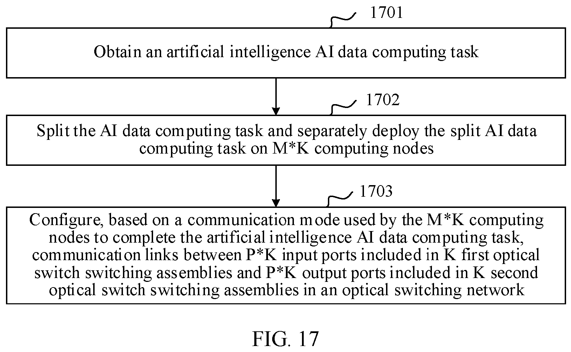

FIG. 17 is a schematic flowchart of an artificial intelligence computing method according to an embodiment of this application. The method is applied to an artificial intelligence computing system. The AI computing system is described above, and details are not described herein again.

1701: Obtain an artificial intelligence AI data computing task. The AI computing system may receive, through a communication network, the AI data computing task sent by user equipment.

1702: Split the AI data computing task and separately deploy the split AI data computing task on M*K computing nodes.

1703: Configure, based on a communication mode used by the M*K computing nodes to complete the artificial intelligence AI data computing task, communication links between P*K input ports included in K first optical switch switching assemblies and P*K output ports included in K second optical switch switching assemblies in an optical switching network.

In a possible implementation, the method further includes: after sending first computing data to a second computing node over a first communication link in the optical switching network, controlling, by a first computing node, a cross link between an input port of a first optical switch switching assembly connected to the first computing node and a first output port to be switched to a cross link with a second output port, to cause the first computing node to send second computing data to a third computing node over a second communication link in the optical switching network, where the first computing node, the second computing node, and the third computing node are any three computing nodes in a computing node cluster. The first communication link includes the cross link between the input port of the first optical switch switching assembly connected to the first computing node and the first output port. The second communication link includes the cross link between the input port of the first optical switch switching assembly connected to the first computing node and the second output port.

In the foregoing design, a cross link between an input port of a first optical switch switching assembly at an ingress stage and an output port is controlled, to control data sent by the computing node to reach different target computing nodes.

In a possible implementation, controlling the cross link between the input port of the first optical switch switching assembly connected to the first computing node and the first output port to be switched to the cross link with the second output port includes:

controlling, through a control unit in the first computing node, the cross link between the input port of the first optical switch switching assembly connected to the first computing node and the first output port to be switched to the cross link with the second output port.

In a possible implementation, the method further includes:

after receiving third computing data from the second computing node over a third communication link in the optical switching network, controlling, by the first computing node, a cross link between an output port of a second optical switch switching assembly connected to the first computing node and a first input port to be switched to a cross link with a second input port, to cause the first computing node to receive fourth computing data from the third computing node over a fourth communication link in the optical switching network, where

the first computing node, the second computing node, and the third computing node are any three computing nodes in the computing node cluster.

In the foregoing design, a cross link between an input port of a first optical switch switching assembly at an egress stage and an output port is controlled, to control the computing node to receive data from different target computing nodes.

An embodiment of this application provides a large-scale all-optical switching computing power trunk constructed based on two slow/fast switching devices: a large-capacity port MEMS optical switching device and a fast optical switching device (an optical switch switching assembly). The two optical switching device satisfy a specific connection manner, so that the large-capacity port MEMS optical switching supports a larger computing trunk scale (a quantity of NPUs/GPUs), for example, 100k+ nodes; and the fast optical switching device supports fast switching response to ensure the network communication flexibility. In a scheduling control mechanism, application communication feature extraction (a communication mode) and a preconfigured connection path between input ports and output ports of the large-capacity port MEMS optical switching are used to establish a high-speed channel in advance, and a local computing node controls fast optical switching and path switching and selection in real time. Through the manner in which three parties collaborate with each other, an end-to-end high-speed channel is quickly established to support non-congestion and ultra-low-latency communication of applications, thereby greatly improving the trunk computing power. In addition, a trunk system is an all-optical switching network, which is protocol-independent and supports smooth evolution to 400G/800G/1.6T bandwidth, so that there is no need to upgrade or replace network devices (computing nodes), and a next-generation trunk network with better competitiveness is constructed.

A person skilled in the art should understand that embodiments of this application may be provided as a method, a system, or a computer program product. Therefore, this application may use a form of hardware only embodiments, software only embodiments, or embodiments combining software and hardware. In addition, this application may use a form of a computer program product that is implemented on one or more computer-usable storage media (including but not limited to a disk memory, a CD-ROM, an optical memory, or the like) that include computer-usable program code.

This application is described with reference to the flowcharts and/or the block diagrams of the method, the device (system), and the computer program product according to embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more processes in the flowcharts and/or in one or more blocks in the block diagrams.

These computer program instructions may alternatively be stored in a computer-readable memory that can instruct a computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

It is clear that a person skilled in the art may make various modifications and variations to embodiments of this application without departing from the scope of embodiments of this application. In this case, this application is intended to cover these modifications and variations of embodiments of this application provided that these modifications and variations fall within the scope of the following claims of this application and their equivalent technologies.

**Claims**

1.  An artificial intelligence computing system, comprising a computing node cluster, an optical switching network, and a control device, wherein

    the computing node cluster comprises K computing node pods, each computing node pod comprises M computing nodes, and each computing node comprises an input port and an output port;

    the optical switching network comprises K first optical switch switching assemblies, K second optical switch switching assemblies, and F optical switching assemblies, each first optical switch switching assembly in the K first optical switch switching assemblies comprises M input ports and P output ports, each second optical switch switching assembly in the K second optical switch switching assemblies comprises P input ports and M output ports, and each optical switching assembly in the F optical switching assemblies comprises N input ports and N output ports, wherein K, M, F, and P are all positive integers, and K*P=F*N;

    M*K output ports comprised in M*K computing nodes in the computing node cluster are connected to M*K input ports comprised in the K first optical switch switching assemblies in one-to-one correspondence, and M*K input ports comprised in the M*K computing nodes are connected to M*K output ports comprised in the K second optical switch switching assemblies in one-to-one correspondence; and

    P*K output ports comprised in the K first optical switch switching assemblies are connected to F*N input ports comprised in the F optical switching assemblies in one-to-one correspondence, and at least F output ports of each first optical switch switching assembly in the K first optical switch switching assemblies are connected to different optical switching assemblies; and F*N output ports comprised in the F optical switching assemblies are connected to P*K input ports comprised in the K second optical switch switching assemblies in one-to-one correspondence, and at least F input ports of each second optical switch switching assembly in the K second optical switch switching assemblies are connected to different optical switching assemblies; and

the control device is configured to configure, based on a communication mode used by the M*K computing nodes to complete an artificial intelligence AI data computing task, communication links between P*K output ports comprised in the K first optical switch switching assemblies and P*K input ports comprised in the K second optical switch switching assemblies in the optical switching network.

2. The system according to claim 1, wherein a first computing node pod further comprises a control unit, and the control unit is configured to: control switching of cross links between input ports and output ports of a first optical switch switching assembly connected to the first computing node pod, and/or control switching of cross links between input ports and output ports of a second optical switch switching assembly connected to the first computing node pod; and the first computing node pod is any computing node pod in the K computing node pods.

3. The system according to claim 1 or 2, wherein the first optical switch switching assembly is an optical switch switching matrix comprising M first optical switch switching devices, each first optical switch switching device comprises one input port and F output ports, and F*M=P.

4. The system according to any one of claims 1 to 3, wherein the second optical switch switching assembly is an optical switch switching matrix comprising M second optical switch switching devices, each second optical switch switching device comprises F input ports and one output port, and F*M=P.

5. The system according to claim 1 or 2, wherein the first optical switch switching assembly comprises an optical switch switching matrix comprising M first optical switch switching devices and comprises one third optical switch switching device comprising M input ports and M output ports, each first optical switch switching device comprises one input port and F output ports, F*M=P, the M output ports comprised in the third optical switch switching device are connected to M input ports of the optical switch switching matrix in one-to-one correspondence, and the M input ports comprised in the third optical switch switching device are connected to M output ports comprised in M computing nodes of a computing node pod that is correspondingly connected to the first optical switch switching assembly in one-to-one correspondence.

6. The system according to any one of claims 1, 2, and 5, wherein
the second optical switch switching assembly comprises an optical switch switching matrix comprising M second optical switch switching devices and comprises one fourth optical switch switching device comprising M input ports and M output ports, each second optical switch switching device comprises one input port and F output ports, F*M=P, the M input ports comprised in the fourth optical switch switching device are connected to M output ports of the optical switch switching matrix in one-to-one correspondence, and the M output ports comprised in the fourth optical switch switching device are connected to M input ports comprised in M computing nodes of a computing node pod that is correspondingly connected to the second optical switch switching assembly in one-to-one correspondence.

7. The system according to any one of claims 1 to 6, wherein each optical switching assembly in the F optical switching assemblies is a micro-mechanical optical switching device.

8. The system according to any one of claims 1 to 6, wherein each optical switching assembly in the F optical switching assemblies comprises H micro-mechanical optical switching devices, each micro-mechanical optical switching device comprises E input ports and E output ports, and H*E=N.

9. The system according to any one of claims 1 to 8, wherein the optical switching network is deployed through a spine-leaf network structure.

10. An artificial intelligence computing method, applied to an artificial intelligence computing system, wherein the system comprises a computing node cluster, an optical switching network, and a control device, the computing node cluster comprises K computing node pods, each computing node pod comprises M computing nodes, and each computing node comprises an input port and an output port;

the optical switching network comprises K first optical switch switching assemblies, K second optical switch switching assemblies, and F optical switching assemblies, each first optical switch switching assembly in the K first optical switch switching assemblies comprises M input ports and P output ports, each second optical switch switching assembly in the K second optical switch switching assemblies comprises P input ports and M output ports, and each optical switching assembly in the F optical switching assemblies comprises N input ports and N output ports, wherein K, M, F, and P are all positive integers, and K*P=F*N;

M*K output ports comprised in M*K computing nodes in the computing node cluster are connected to M*K input ports comprised in the K first optical switch switching assemblies in one-to-one correspondence, and M*K input ports comprised in the M*K computing nodes are connected to M*K output ports comprised in the K second optical switch switching assemblies in one-to-one correspondence; and

P*K output ports comprised in the K first optical switch switching assemblies are connected to F*N input ports comprised in the F optical switching assemblies in one-to-one correspondence, and at least F output ports of each first optical switch switching assembly in the K first optical switch switching assemblies are connected to different optical switching assemblies; and F*N output ports comprised in the F optical switching assemblies are connected to P*K input ports comprised in the K second optical switch switching assemblies in one-to-one correspondence, and at least F input ports of each first optical switch switching assembly in the K second optical switch switching assemblies are connected to different optical switching assemblies; and

the method comprises:

obtaining an artificial intelligence AI data computing task;

splitting the AI data computing task and separately deploying the split AI data computing task on the M*K computing nodes; and

configuring, based on a communication mode used by the M*K computing nodes to complete the artificial intelligence AI data computing task, communication links between P*K input ports comprised in the K first optical switch switching assemblies and P*K output ports comprised in the K second optical switch switching assemblies in the optical switching network.

11. The method according to claim 10, wherein the method further comprises:

after sending first computing data to a second computing node over a first communication link in the optical switching network, controlling, by a first computing node, a cross link between an input port of a first optical switch switching assembly connected to the first computing node and a first output port to be switched to a cross link with a second output port, to cause the first computing node to send second computing data to a third computing node over a second communication link in the optical switching network, wherein the first computing node, the second computing node, and the third computing node are any three computing nodes in the computing node cluster.

12. The method according to claim 11, wherein controlling the cross link between the input port of the first optical switch switching assembly connected to the first computing node and the first output port to be switched to the cross link with the second output port comprises:

controlling, through a control unit in the first computing node, the cross link between the input port of the first optical switch switching assembly connected to the first computing node and the first output port to be switched to the cross link with the second output port.

13. The method according to any one of claims 10 to 12, wherein the method further comprises:

after receiving third computing data from the second computing node over a third communication link in the optical switching network, controlling, by the first computing node, a cross link between an output port of a second optical switch switching assembly connected to the first computing node and a first input port to be switched to a cross link with a second input port, to cause the first computing node to receive fourth computing data from the third computing node over a fourth communication link in the optical switching network, wherein the first computing node, the second computing node, and the third computing node are any three computing nodes in the computing node cluster.

FIG. 1

FIG. 2

FIG. 3

| P0 | 1 | 2 | 3 | 4 |
| P1 | 5 | 6 | 7 | 8 |
| P2 | 9 | 10 | 11 | 12 |
| P3 | 13 | 14 | 15 | 16 |

Full switching ⇒

| P0 | 1 | 5 | 9 | 13 |
| P1 | 2 | 6 | 10 | 14 |
| P2 | 3 | 7 | 11 | 15 |
| P3 | 4 | 8 | 12 | 16 |

FIG. 4

Optical input

MEMS micromirror

MEMS micromirror

Optical output

FIG. 5

FIG. 6

FIG. 7

FIG. 8

FIG. 9

FIG. 10

FIG. 11

Control device

Spine switch

Optical switching assembly 1 (N×N)

Optical switching assembly 2 (N×N)

Optical switching assembly E (N×N)

Leaf switch

First optical switch switching assembly 1 (M×P)

Second optical switch switching assembly 1 (P×M)

First optical switch switching assembly 2 (M×P)

Second optical switch switching assembly 2 (P×M)

First optical switch switching assembly K (M×P)

Second optical switch switching assembly K (P×M)

Computing node pod 1

Computing node pod 2

Computing node pod K

1　2　…　M

FIG. 12

FIG. 13

FIG. 14

FIG. 15

FIG. 16

EP 4 642 049 A1

~✓ 1701

Obtain an artificial intelligence AI data computing task

~✓ 1702

Split the AI data computing task and separately deploy the split AI data computing task on M*K computing nodes

~✓ 1703

Configure, based on a communication mode used by the M*K computing nodes to complete the artificial intelligence AI data computing task, communication links between P*K input ports included in K first optical switch switching assemblies and P*K output ports included in K second optical switch switching assemblies in an optical switching network

FIG. 17

## INTERNATIONAL SEARCH REPORT

| International application No. |
| --- |
| **PCT/CN2024/071665** |

**A. CLASSIFICATION OF SUBJECT MATTER**

H04Q11/00(2006.01)i

According to International Patent Classification (IPC) or to both national classification and IPC

**B. FIELDS SEARCHED**

Minimum documentation searched (classification system followed by classification symbols)

IPC:H04Q，H04L

Documentation searched other than minimum documentation to the extent that such documents are included in the fields searched

Electronic data base consulted during the international search (name of data base and, where practicable, search terms used)

CNTXT, VCN, DWPI, CNKI, IEEE: 人工智能, 机器学习, 光, 交换, 交叉, 开关, 计算, 算力, 节点, 集群, 簇, 并行, 输入, 输出, 端口, 三级, 三层, 链路, CLOS, AI, ML, optical, switch+, comput+, node, cluster, parallel, port, input, output, cross, link

**C. DOCUMENTS CONSIDERED TO BE RELEVANT**

| Category* | Citation of document, with indication, where appropriate, of the relevant passages | Relevant to claim No. |
| --- | --- | --- |
| A | CN 101277547 A (TIANJIN OPTICAL ELECTRICAL COMMUNICATION TECHNOLOGY CO., LTD.) 01 October 2008 (2008-10-01) description, page 1 line 15-page 2 last line, and figure 2 | 1-13 |
| A | EP 1326384 A2 (NORTEL NETWORKS LTD.) 09 July 2003 (2003-07-09) description, paragraphs 0020-0032, and figure 1 | 1-13 |
| A | CN 101311917 A (INSTITUTE OF PROCESS ENGINEERING, CHINESE ACADEMY OF SCIENCES) 26 November 2008 (2008-11-26) entire document | 1-13 |
| A | CN 106851442 A (XIDIAN UNIVERSITY) 13 June 2017 (2017-06-13) entire document | 1-13 |
| A | US 2022140934 A1 (MICROSOFT TECHNOLOGY LICENSING, L.L.C.) 05 May 2022 (2022-05-05) entire document | 1-13 |

☑ Further documents are listed in the continuation of Box C.   ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **13 March 2024** | **20 March 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**EP 4 642 049 A1**

## INTERNATIONAL SEARCH REPORT

<table>
<tr><td colspan="2"></td><td>International application No.<br>**PCT/CN2024/071665**</td></tr>
</table>

**C. DOCUMENTS CONSIDERED TO BE RELEVANT**

| Category* | Citation of document, with indication, where appropriate, of the relevant passages | Relevant to claim No. |
|---|---|---|
| A | 周宇萌等 (ZHOU, Yumeng et al.). "超大容量光交换机中器件约束的Clos网络路径设计 (Path Design of Clos Network Based on Device Constraint in Large Capacity Optical Switches)"<br>光学学报 (Acta Optica Sinica), Vol. 33, No. 8, 31 August 2013 (2013-08-31),<br>entire document | 1-13 |

Form PCT/ISA/210 (second sheet) (July 2022)

**INTERNATIONAL SEARCH REPORT**
Information on patent family members

International application No.

**PCT/CN2024/071665**

| Patent document cited in search report | | | Publication date (day/month/year) | Patent family member(s) | | | Publication date (day/month/year) |
|---|---|---|---|---|---|---|---|
| CN | 101277547 | A | 01 October 2008 | None | | | |
| EP | 1326384 | A2 | 09 July 2003 | DE | 60211111 | D1 | 08 June 2006 |
| | | | | CA | 2365963 | A1 | 20 June 2003 |
| | | | | US | 2003118013 | A1 | 26 June 2003 |
| CN | 101311917 | A | 26 November 2008 | None | | | |
| CN | 106851442 | A | 13 June 2017 | None | | | |
| US | 2022140934 | A1 | 05 May 2022 | US | 2023125673 | A1 | 27 April 2023 |
| | | | | WO | 2022098468 | A1 | 12 May 2022 |
| | | | | CN | 116530070 | A | 01 August 2023 |

Form PCT/ISA/210 (patent family annex) (July 2022)

**EP 4 642 049 A1**

**REFERENCES CITED IN THE DESCRIPTION**

**Patent documents cited in the description**

- CN 202310244351